# EUROPÄISCHE PATENTANMELDUNG

(11) **EP 1 457 631 A2**
(43) Veröffentlichungstag der Anmeldung: **15.09.2004**
(21) Anmeldenummer: 04003288.0
(22) Anmeldetag: 13.02.2004
(51) Int. Cl.: E05F 5/02

(54) **Vorrichtung zur Dämpfung der Bewegung beweglicher Möbelteile in deren Schliessbereich**

(30) Priorität: 17.02.2003 DE 20302524 U
(71) Anmelder: Arturo Salice S.p.A., I-22060 Novedrate (Como) (IT)
(72) Erfinder:
(74) Vertreter: Laufhütte, Dieter, Dr.-Ing.

(57) **Zusammenfassung**

Die Erfindung betrifft eine Vorrichtung zur Dämpfung der Bewegung beweglicher Möbelteile in deren Schließstellung. Erfindungsgemäß ist ein an einem festen Wand- oder Korpusteil befestigbares Gehäuse vorgesehen, in welchem ein Hebel schwenkbar oder ein Stößel verschieblich geführt ist, der von dem beweglichen Möbelteil in dessen Schließbereich verschwenkt oder verschoben wird und dabei über mindestens zweistufige Getriebemittel mit einem Übersetzungsverhältnis ins Schnelle einen Rotationsdämpfer oder den Kolben eines Dämpfungszylinders beaufschlagt.

## Beschreibung

Die Erfindung betrifft eine Vorrichtung zur Dämpfung der Bewegung beweglicher Möbelteile in deren Schließbereich, vorzugsweise zur Dämpfung der Schließbewegung von Türen, Klappen oder Schubladen.

Vorrichtungen dieser Art dienen dazu, bewegliche Möbelteile, beispielsweise Türen, Klappen oder Schubladen, beim schwungvollen Bewegen in ihre Schließstellung abzubremsen, um Geräusche beim Anstoßen an Korpusteile von Möbeln oder festen Teilen und Stoßbeanspruchungen zu verringern. Bei bekannten Vorrichtungen dieser Art werden die der Dämpfung oder dem Abbremsen der Möbelteile dienenden Dämpfungseinrichtungen nur über einen verhältnismäßig kleineren Weg im Schließbereich der beweglichen Möbelteile beaufschlagt, so dass sie nur eine entsprechend geringe Dämpfung oder Abbremsung zu bewirken vermögen.

Aufgabe der Erfindung ist es daher, eine Vorrichtung der eingangs angegebenen Art zu schaffen, die auch während der verhältnismäßig kleinen Schließbewegung der Möbelteile deren starke Abbremsung und Dämpfung bewirkt.

Erfindungsgemäß wird dieser Aufgabe durch ein an einem festen Wand- oder Korpusteil befestigbaren Gehäuse gelöst, in dem ein Hebel schwenkbar gelagert oder ein Stößel verschieblich geführt ist, der von dem beweglichen Möbelteil in dessen Schließbereich verschwenkt oder verschoben wird und dabei über mindestens zweistufige Getriebemittel mit einem Übersetzungsverhältnis ins Schnelle einen Rotationsdämpfer oder den Kolben eines Dämpfungszylinders beaufschlagt. Durch die erfindungsgemäß vorgesehenen Getriebemittel wird die verhältnismäßig kleine Schließbewegung der beweglichen Möbelteile, bei der es sich um eine Schwenkbewegung oder eine translatorische Bewegung handeln kann, in der Weise untersetzt, dass diese eine vergrößerte Drehung des Dämpfungsgliedes des Rotationsdämpfers oder eine vergrößerte Bewegung des Kolbens eines Dämpfungszylinders zur Folge hat.

Nach einer erfinderischen Ausgestaltung ist vorgesehen, dass der in dem Gehäuse gelagerte Hebel konzentrisch zu seiner Lagerachse ein Zahnsegment trägt, das mit einem in dem Gehäuse gelagertem Ritzel kämmt, das mit einem auf dem Eingangszapfen des Rotationsdämpfers befestigten Zahnrad im Eingriff ist. Auf diese Weise lässt sich durch ein zweistufiges Getriebe von dem Dämpfungshebel ein gegenüber dessen Schwenkwinkel stark vergrößerter Drehwinkel auf den die Dämpfung bewirkenden Rotor des Rotationsdämpfers übertragen.

Nach einer bevorzugten Ausführungsform ist vorgesehen, dass das Ritzel zwei verzahnte Segmente aufweist, von denen ein Segment mit kleinerem Radius mit dem Zahnsegment des Hebels und das Zahnsegment des Ritzels mit größerem Radius mit dem Zahnrad des Rotors des Rotationsdämpfers kämmt.

Nach einer weiteren bevorzugten Ausführungsform ist vorgesehen, dass der der Dämpfung dienende Hebel auf einem Zapfen befestigt ist, der der Eingangszapfen eines zweiten in dem Gehäuse gehalterten Rotationsdämpfers ist. Durch diese Ausgestaltung lässt sich die Dämpfungswirkung weiter steigern. Der zweite Rotationsdämpfer kann jedoch entfallen, wenn aufgrund des gegebenen Übersetzungsverhältnisses die Dämpfungswirkung des ersten Rotationsdämpfers ausreicht.

Zweckmäßigerweise ist der Hebel in Öffnungsrichtung von einer Feder beaufschlagt, so dass die Feder den Dämpfungshebel nach dem Bewegen des beweglichen Möbelteils in die Öffnungsstellung in seine Bereitschaftsstellung verschwenkt. Um eine möglichst schnelle Bewegung des Dämpfungshebels in seine Bereitschaftsstellung zu erreichen, setzen der oder die Rotationsdämpfer der Öffnungsrichtung nur einen geringeren Widerstand entgegen als der Schließrichtung.

Ein Ausführungsbeispiel der Erfindung wird nachstehend an der Zeichnung näher erläutert. In dieser zeigt:
- Figur 1:: eine perspektivische Darstellung einer erfindungsgemäßen Dämpfungsvorrichtung, deren Gehäuse an einer Seitenwand eines Schranks befestigt und deren Dämpfungshebel im Schließbereich die Schließbewegung der Tür dämpft,
- Figur 2:: den Deckel des Gehäuses der Dämpfungsvorrichtung in perspektivischer Darstellung,
- Figur 3:: den Montageteil des Gehäuses in perspektivischer Darstellung,
- Figur 4:: eine perspektivische Darstellung des Dämpfungshebels,
- Figur 5:: eine perspektivische Darstellung des Ritzels mit zwei Zahnsegmenten mit unterschiedlichen Radien,
- Figur 6:: eine Draufsicht auf das Montageteil des Gehäuses nach Figur 3 und
- Figur 7:: einen Schnitt durch das Montageteil längs der Linie VII - VII in Figur 6.

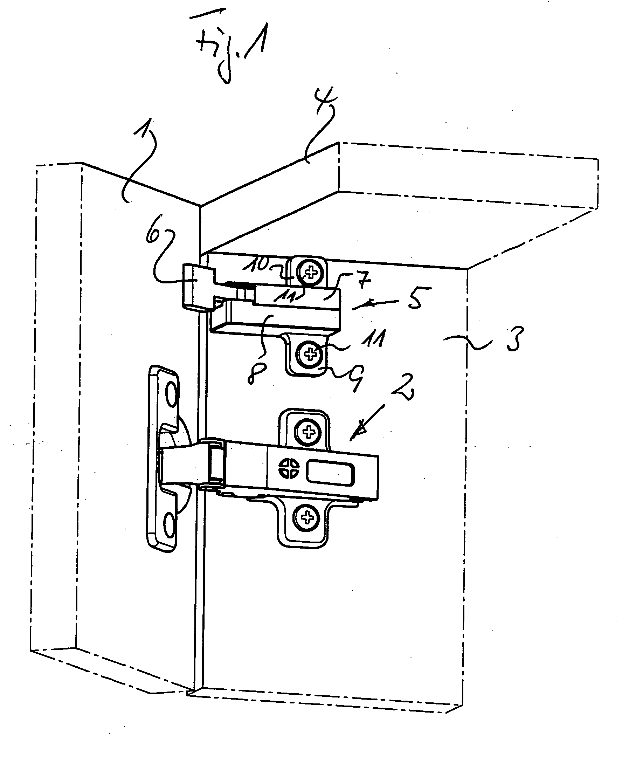

Aus Figur 1 ist der obere linke Eckbereich eines Schranks ersichtlich, dessen in der Öffnungsstellung befindliche Tür 1 durch übliche Doppellenkerscharniere 2 mit einer Seitenwand 3 des Schranks verbunden ist. Dicht unter der Deckwand 4 des Schranks ist in der dargestellten Weise die Dämpfungsvorrichtung 5 befestigt, deren Dämpfungshebel 6 derart über die Öffnungsseite des Schrankkorpus hinaus ragt, dass er erst im Schließbereich der Tür 1 dämpfend und abbremsend an dieser angreift. Das Gehäuse der Dämpfungsvorrichtung 5 besteht aus zwei Gehäusehälften 7, 8, die in der Befestigungsebene mit flügelartigen Fortsätzen 9, 10 versehen sind. Die Fortsätze 9, 10 sind mit Befestigungsbohrungen versehen, durch die die Befestigungsschrauben 11 zur Verbindung mit der Schrankwand 3 greifen.

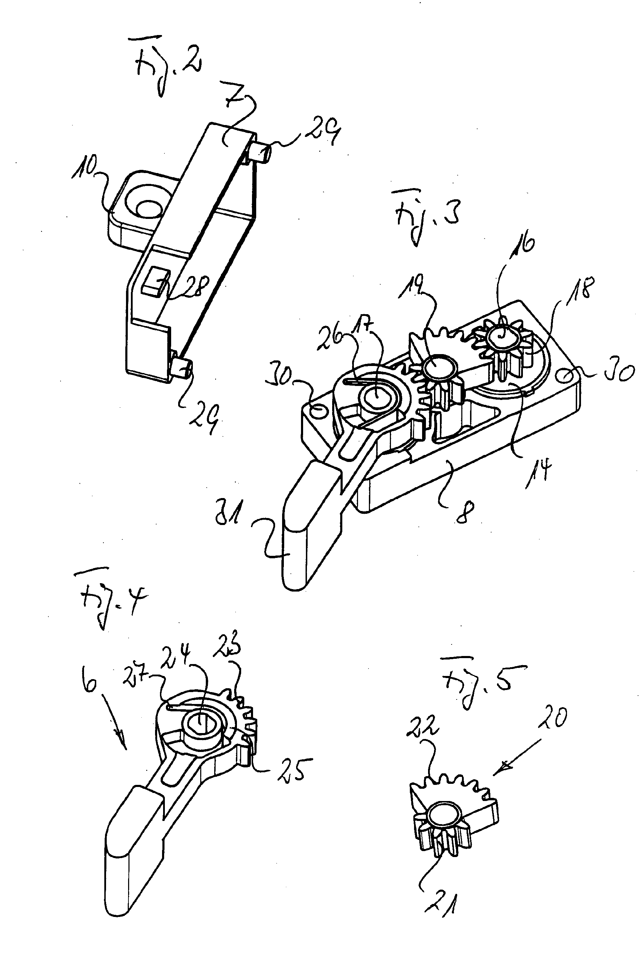

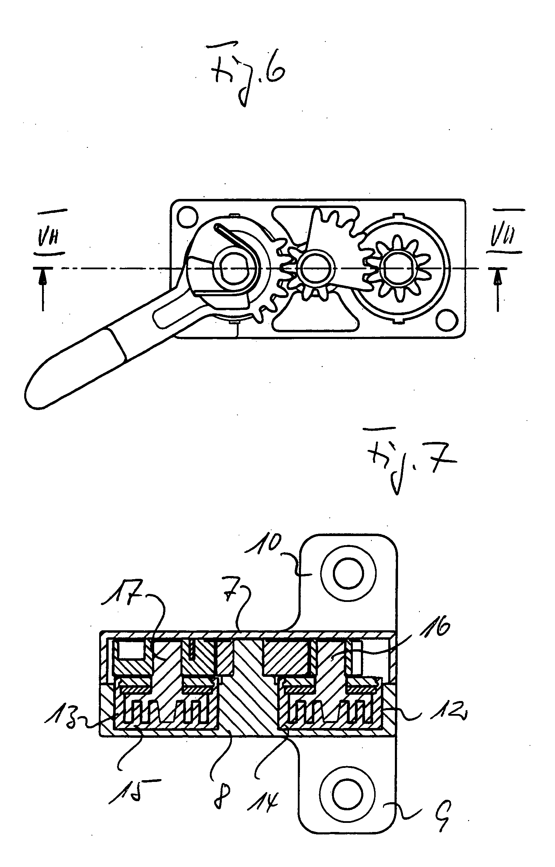

Wie aus Figur 3 ersichtlich ist, bildet die Gehäusehälfte 8 das Montageteil der Dämpfungsvorrichtung. Das Montagteil 8 ist mit zwei Sacklochbohrungen 12, 13 versehen, in denen die Gehäuse der Rotationsdämpfer 14, 15 eingesetzt und drehfest gehalten sind. Die Rotationsdämpfer 14, 15 sind von üblicher bekannter Bauweise und werden daher nicht näher beschrieben. Die Gehäuse der Rotationsdämpfer sind durch Deckel geschlossen, die die Zapfen 16, 17 der Rotoren der Rotationsdämpfer durchsetzten. Auf den Zapfen 17 des Rotationsdämpfers 15 ist der Dämpfungshebel 6 drehfest aufgesetzt. Der Zapfen 16 des Rotationsdämpfers 14 trägt drehfest ein Zahnrad 18. Zwischen den Rotationsdämpfern 14, 15 ist auf einem Zapfen 19 des Montageteils 8 ein Ritzel 20 frei drehbar gelagert, das aus zwei einander gegenüber liegenden Zahnsegmenten besteht, von denen das Zahnsegment 21 einen kleineren Radius und das Zahnsegment 22 einen größeren Radius aufweist. Das Zahnsegment 22 kämmt mit dem Zahnrad 18 des Rotationsdämpfers 14. Das Zahnsegment 21 mit kleinerem Radius kämmt mit einem Zahnsegment 23, das konzentrisch zur Schwenkachse an dem Dämpfungshebel 6 angeordnet ist. Der Dämpfungshebel 6 ist mit einer die Lagerbohrung 24 des Dämpfungshebels 6 teilweise umgebenden Ausnehmung 25 versehen, in der eine Schenkelfeder 26 gehaltert ist. Das aus Figur 3 ersichtliche obere Ende der Schenkelfeder 26 greift zu seiner Halterung in einen Schlitz 27 im oberen Endbereich der Ausnehmung 25 ein. Der untere Bereich der Ausnehmung 25 ist in der dargestellten Weise mit einer Verbreiterung versehen, in die nach dem Schließen des Gehäuses durch Aufsetzen des Gehäuseteils 7 auf den Montageteil 8 ein Widerlager 28 greift, das in der aus Figur 2 ersichtlichen Weise an der oberen Seitenwand des Gehäusedeckels 7 befestigt ist. Dieses stegartige Widerlager 28 dient der Abstützung des anderen Schenkels der Schenkelfeder 26, so dass in der Öffnungsstellung der Tür der Dämpfungshebel 6 aus seiner eingeschwenkten Stellung in seine ausgeschwenkte Bereitschaftsstellung verschwenkt wird.

Das Gehäuseteil 7 ist an diagonal gegenüberliegenden Bereichen mit Befestigungszapfen 29 versehen, die beim Zusammenfügen und Schließen des Gehäuses in Bohrungen 30 des Montageteils 8 greifen. Zum schonenden Angriff an der Innenseite der Schranktür 1 ist der Dämpfungshebel 6 mit einem verbreiterten Betätigungsteil 31 versehen.

## Patentansprüche

1. Vorrichtung zur Dämpfung der Bewegung beweglicher Möbelteile in deren Schließbereich, vorzugsweise zur Dämpfung der Schließbewegung von Türen, Klappen oder Schubladen,
**gekennzeichnet durch**
ein an einem festen Wand- oder Korpusteil (3) befestigbaren Gehäuse (7, 8), in dem ein Hebel (6) schwenkbar oder ein Stößel verschieblich geführt ist, der von dem beweglichen Möbelteil (1) in dessen Schließbereich verschwenkt oder verschoben wird und dabei über mindestens zweistufige Getriebemittel mit einem Übersetzungsverhältnis ins Schnelle einen Rotationsdämpfer (14, 15) oder den Kolben eines Dämpfungszylinders beaufschlagt.

2. Vorrichtung nach Anspruch 1, **dadurch gekennzeichnet, dass** der in dem Gehäuse (7, 8) gelagerte Hebel (5) konzentrisch zu seiner Lagerachse (17) ein Zahnsegment (23) trägt, das mit einem in dem Gehäuse (7, 8) gelagerten Ritzel (20) kämmt, das mit einem auf dem Eingangszapfen (16) des Rotationsdämpfers (14) befestigten Zahnrad (18) im Eingriff ist.

3. Vorrichtung nach Anspruch 2, **dadurch gekennzeichnet, dass** das Ritzel (20) zwei verzahnte Segmente (21, 22) aufweist, von denen ein Segment (21) mit kleinerem Radius mit dem Zahnsegment (23) des Hebels (6) und das Zahnsegment (22) des Ritzels (20) mit größerem Radius mit dem Zahnrad (18) des Rotationsdämpfers (14) kämmt.

4. Vorrichtung nach Anspruch 2 oder 4, **dadurch gekennzeichnet, dass** der der Dämpfung dienende Hebel (6) auf einem Zapfen (17) befestigt ist, der der Eingangszapfen eines zweiten in dem Gehäuse gehalterten Rotationsdämpfers (15) ist.

5. Vorrichtung nach einem der Ansprüche 1 bis 4, **dadurch gekennzeichnet, dass** der Hebel (6) in Öffnungsrichtung von einer Feder (26) beaufschlagt ist.

6. Vorrichtung nach Anspruch 5, **dadurch gekennzeichnet, dass** der oder die Rotationsdämpfer (14, 15) der Öffnungsrichtung einen Widerstand entgegensetzen, der kleiner ist als der Widerstand in Schließrichtung.
